# EUROPEAN PATENT APPLICATION

(11) **EP 3 205 206 A1**
(43) Date of publication of application: **16.08.2017**
(21) Application number: 17155040.3
(22) Date of filing: 07.02.2017
(51) Int. Cl.: A01K 1/015

(54) **FLOOR PLATE FOR A CATTLE STABLE**

(30) Priority: 09.02.2016 BE 201605103
(71) Applicant: VDV R&D BVBA, 2310 Rijkevorsel (BE)
(72) Inventor: VAN DER VELDEN, Gert, 2321 MEER (HOOGSTRATEN) (BE)
(74) Representative: Van hunsel, Lieven M.S.

(57) **Abstract**

Floor plate (1) for a stable having a flat top surface (2) and a flat bottom surface (3) as well as a certain thickness (D), wherein the floor plate (1) is composed of a concrete portion (4) and an insulating portion (5) and wherein a supply pipe (7) and a return pipe (8) are embedded in the concrete portion (4) and wherein the central portion (10) of the bottom surface (3) is formed of the insulating portion (5) made of insulating material (6), wherein this insulating portion (5) is further surrounded at its edges (11) by the concrete portion (4) which thus also forms the perimeter (12) of the bottom surface (3).

## Description

The present invention concerns a floor plate for a stable.

More particularly, the present invention concerns a floor plate for a stable wherein the floor plate has a top surface and a bottom surface as well as a certain thickness, wherein the floor plate is composed of a concrete portion and an insulating portion formed of a plate of insulating material and wherein a supply pipe and a return pipe are embedded in the concrete portion, designed for use in a floor heating system of the stable.

Without limiting the invention thereto, a floor plate in accordance with the invention is particularly interesting to be used in a pig pen.

Nevertheless, the invention can also be applied to other types of stables, for example stables for other animals such as cattle, goats and sheep, horses and the like.

Floor plates for stables are already known, as well as floor plates for stables wherein certain features are embedded in order to heat the stable floor, but these known floor plates for stables could be improved.

A first major disadvantage of the known floor plates for a stable with piping for a floor heating system is that the floor plates are made relatively thick.

Of course, a certain thickness is required to resist the loads exerted on the floor plate by the weight of the animals.

Nevertheless, the concrete portion of such a known floor plate with floor heating is unnecessarily thick, and a similar merely concrete floor plate without any floor heating having a much smaller thickness or smaller volume of concrete would also be appropriate to carry the load on the floor plate of a stable, such as for example a pig pen.

A known concrete floor plate with embedded pipes and insulation for floor heating is much thicker, as a result of which such a floor plate contains a lot of concrete, which thus makes the floor plate relatively expensive.

Another disadvantage of an inappropriate thickness of the known floor plates for stables, and in particular for pig pens, is that the operation of the floor heating is strongly slowed down by the thickness of the concrete portion, since the entire concrete portion has to be heated up as well during the heating up before the heat can be released to the floor surface and can be delivered to the animals.

Also, the present invention aims to provide a solution to one or several of the aforesaid and/or other problems.

More particularly, the aim of the invention is to achieve a floor plate for a stable wherein floor heating pipes are embedded, together with insulating material, and whose thickness is as small as possible.

Another aim of the invention is to offer a floor plate for stables which can be manufactured in a relatively inexpensive manner and with which a faster response time of the heating installation can be achieved.

To this end, the present invention concerns a floor plate for a stable wherein the floor plate has a top surface and a bottom surface as well as a certain thickness, wherein the floor plate is composed of a concrete portion and an insulating portion formed of a plate of insulating material and wherein a supply pipe and a return pipe are embedded in the concrete portion, designed to serve in a floor heating system, wherein the top surface and the bottom surface of the floor plate are further made substantially flat, with the exception of any grooves provided in the top surface, and wherein the central portion of the bottom surface is formed of the insulating portion made of insulating material, wherein this insulating portion is further surrounded at its edges by the concrete portion which thus also forms the perimeter of the bottom surface.

A first major advantage of such a floor plate according to the invention is that its top surface and bottom surface are made flat.

Indeed, in the known floor plates, the top surface is made convex in order to drain urine of the animals to the edges of the floor plate.

This is a first reason why a known floor plate is made much too thick, since the urine can be drained just as well by providing grooves in the top surface of the floor plate, as is the case with a floor plate according to the invention.

Another major advantage of a floor plate according to the invention consists in that a major part of the bottom surface of the floor plate consists of an insulating portion made of insulating material.

For, just as with the known floor plates, the aim of such an insulating portion is that heat released by the piping of the floor heating is conducted as much as possible to the stable and that heat released by the piping of the floor heating should be prevented as much as possible from being delivered in the direction below the floor plate.

In the known floor plates, the insulating portion is provided to that end under the piping of the floor heating, but this insulating portion is entirely embedded in the concrete portion.

Thus, the thickness of the floor plate increases, the known floor plates are less efficient and once again much more concrete is required for manufacturing the known floor plates, as compared with a floor plate according to the invention.

By embodying the central portion of the bottom surface of the floor plate as an insulating portion, this has for a result that the heat will be radiated rather to the top surface on the one hand, which makes a floor plate according to the invention efficient, whereas far less concrete is required for their construction as compared with the known floor plates on the other hand, which is very advantageous for the cost of a floor plate according to the invention.

Another advantage of a floor plate according to the invention is that the insulating portion is surrounded at its edges by the concrete portion, so that the perimeter of the bottom surface is very robust and the floor plate hence is very sturdy, which contributes to the service life of the floor plate.

A floor plate according to the invention preferably has a rectangular perimeter.

Such an embodiment of a floor plate according to the invention is advantageous in that it allows to combine and connect several floor plates according to the invention in a very simple manner.

Nevertheless, it is not excluded according to the invention to manufacture floor plates having an entirely different shape.

In any case, the aim according to the invention is that a floor plate according to the invention can be connected to other similar floor plates.

Thus, such a floor plate according to the invention forms an element which, by combining it with other such floor plates, can be used to form an entire floor with embedded piping for the floor heating.

The aim hereby is of course that the embedded piping in each floor plate can be connected to the piping of nearby floor plates.

In a preferred embodiment of a floor plate according to the invention, a recess is provided at the far ends of the supply pipe and the return pipe in the concrete portion, designed for fitting coupling pieces with which the supply pipe and the return pipe of adjacent floor plates can be coupled.

A major advantage of such an embodiment of a floor plate according to the invention is that it is very easy to couple several floor plates and that, moreover, the achieved couplings can be easily embedded in the concrete portion of the floor plates afterwards by filling the recess with concrete mix after the respective pipes have been coupled.

In a preferred embodiment of a floor plate according to the invention, its thickness varies between 8 and 10 cm.

Such an embodiment of a floor plate for a stable wherein piping for a floor heating is embedded is very interesting, since its thickness is much smaller than that of the known floor plates for stables, which greatly reduces its cost, whereas the efficiency of the floor heating increases.

Stables and especially pig pens occupy very large surfaces, so that reducing the cost of a single floor plate and increasing the efficiency of the heating of the stable by means of such a floor plate has a great impact on the operating efficiency of livestock farmers.

According to yet another preferred embodiment of a floor plate in accordance with the invention, its insulating portion is formed of a plate of insulating material having a thickness between 1.5 and 3 cm.

Since the insulating portion of a floor plate according to the invention directly forms the central portion of the bottom surface of the floor plate, it contributes as such to a great reduction of the thickness of the concrete portion, compared with the known floor plates.

By providing an efficient and thin layer of insulation material which partly, if not almost entirely forms the bottom surface of the floor plate, a solution is provided which is thin, inexpensive, offers sufficient bearing capacity and an efficient heat transfer.

In order to better explain the characteristics of the invention, the following preferred embodiment of a floor plate according to the invention is described by way of example only without being limitative in any way, with reference to the accompanying drawings, in which:
figure 1 shows a possible embodiment of a floor plate according to the invention seen in perspective;
figure 2 is a plan view according to arrow F2 of that same floor plate;
figure 3 is a cross-sectional view through the floor plate according to a section indicated by III-III in figure 2;
figure 4 is a longitudinal cross section through the floor plate according to a section indicated by IV-IV in figure 2; and,
figure 5 is a cross-section through the floor plate according to a section indicated by V-V in figure 3.

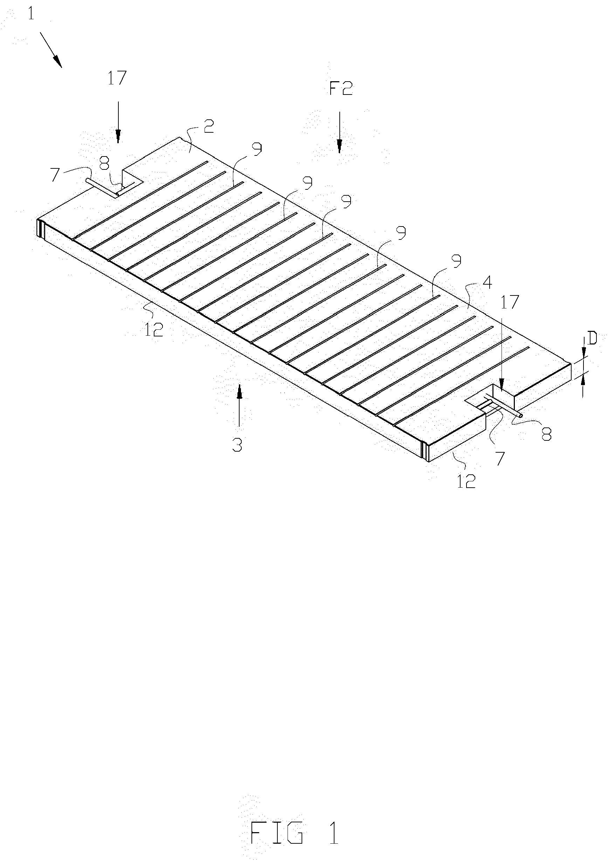

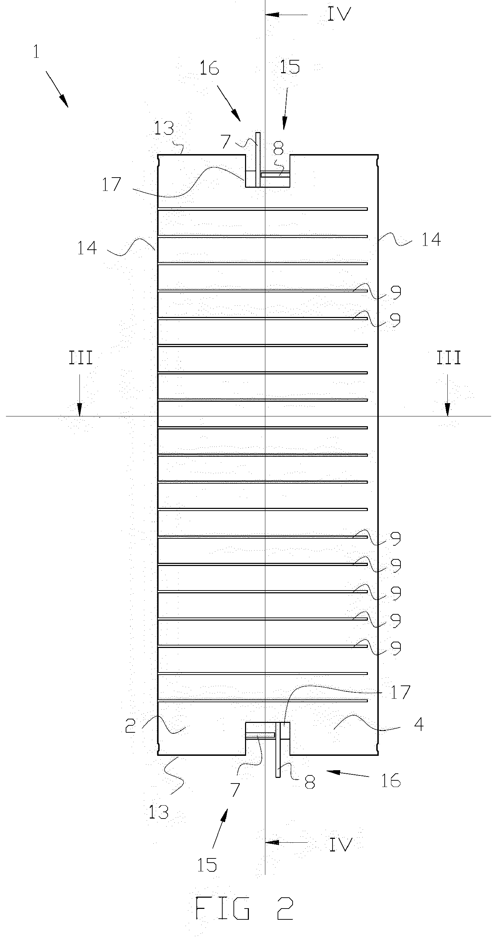

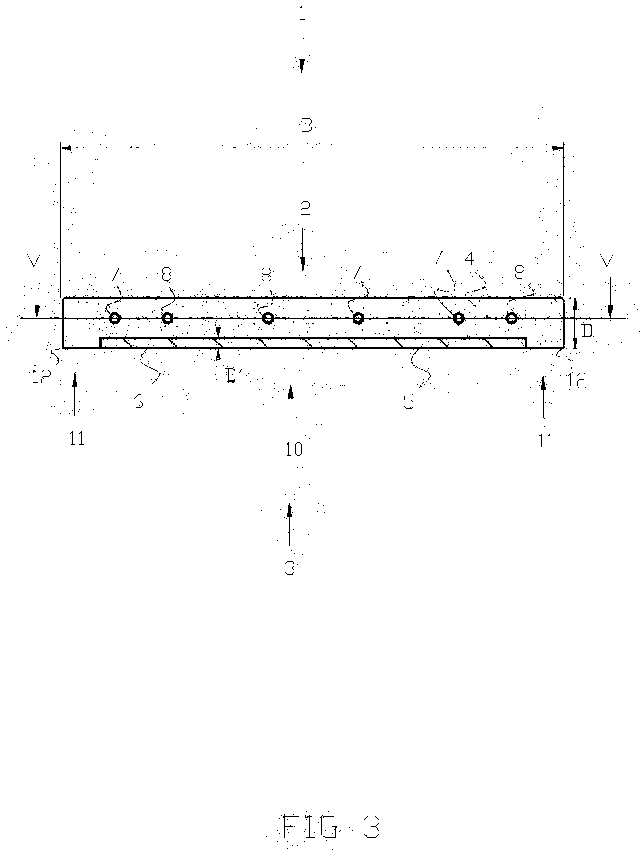

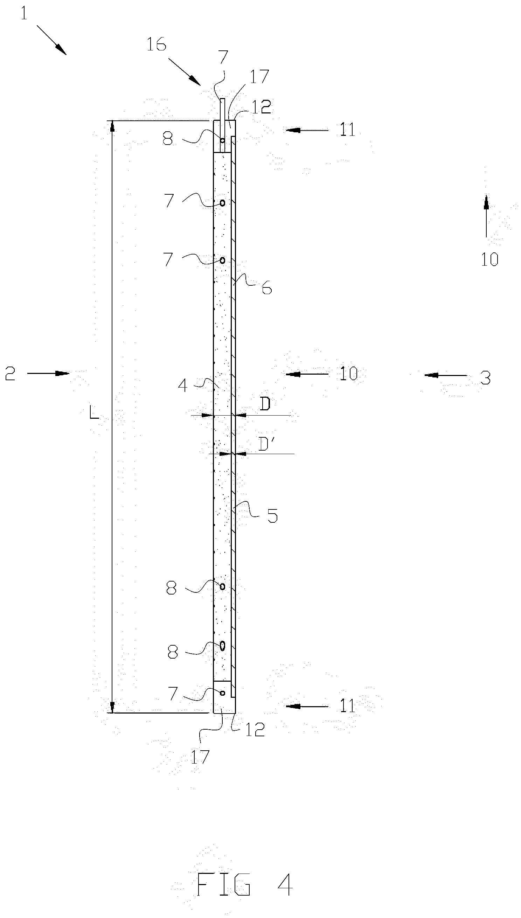

The floor plate 1 according to the invention illustrated in figures 1 to 5 is a floor plate 1 which is designed for a stable and in particular for a pig pen.

The floor plate 1 has a top surface 2 and a bottom surface 3 as well as a certain thickness D.

The thickness D is preferably 10 cm or less.

The floor plate 1 consists of a concrete portion 4 and an insulating portion 5 which is formed of a plate 5 made of an insulating material 6 having a thickness D'.

The thickness D' is preferably some 2 cm.

In the concrete portion 4 are embedded a supply pipe 7 and a return pipe 8.

Said supply pipe 7 and return pipe 8 are designed to be part of a floor heating system, which is further not represented in the figures.

The aim hereby is that hot water coming from the boiler of the heating installation is carried via the supply pipe 7 to the stable and back to the boiler via the return pipe 8.

A first characteristic of a floor plate 1 according to the invention is that the top surface 2 and the bottom surface 3 of the floor plate 1 are substantially flat.

This is entirely different from what we know from the prior art floor plates, which have a convex top surface in order to be able to effectively dispose of the urine of the animals.

In a floor plate 1 according to the invention, the problem of the disposal of the animal urine is solved by means of transverse, inclined grooves 9, provided in the top surface 2 of the floor plate 1.
Another major characteristic of a floor plate 1 according to the invention is that the central portion 10 of its bottom surface 3 is formed of the insulating portion 5 made of insulating material 6.

This insulating portion 5 is further surrounded at the edges 11 by the concrete portion 4 which thus also forms the perimeter 12 of the bottom surface 3.

The floor plate 1 in this case has a rectangular perimeter, with short sides 13 having a length B and forming the width of the floor plate 1, and long sides 14 having a length L and forming the length of the floor plate 1, but this does not necessarily have to be the case according to the invention.

In a typical embodiment, the width B of the floor plate 1 is about 1 meter and its length L is about 3 m, but of course it is possible according to the invention to manufacture floor plates 1 in a wide range of sizes.

In a preferred embodiment of a floor plate 1 according to the invention, the aim is that the floor plate 1 can be connected to other similar floor plates 1.

In order to accomplish this, certain measures have been taken in the embodiment represented in figures 1 to 5 which must not necessarily be the same in other embodiments of a floor plate 1 according to the invention.

In the given example of figures 1 to 5, the supply pipe 7 and the return pipe 8 extend between the short sides 13 of the floor plate 1.

More particularly, the supply pipe 7 and the return pipe 8 extend at a short side 13 of the floor plate 1 according to directions XX' and YY' which are perpendicular to each other.

The direction XX' is parallel to a long side 14 of the floor plate 1, whereas the direction YY' is parallel to a short side 13 of the floor plate 1.

Another notable feature with regard to the supply pipe 7 and the return pipe 8 is that one far end 15 is directed parallel to a short side 13 of the floor plate 1, i.e. according to direction YY', and that the other far end 16 of a supply pipe 7 or a return pipe 8 is directed parallel to a long side 14 of the floor plate 1, i.e. according to direction XX'.

In the given embodiment of the figures, the far ends 16 extending according to the direction XX' parallel to the length L of the floor plate 1 extend somewhat beyond the side edges of the floor plate 1, but this is not necessary according to the invention.

At the far ends 15 and 16 of the supply pipe 7 and the return pipe 8, a recess 17 is provided in the concrete portion 4 designed for fitting connecting pieces with which the supply pipe 7 and the return pipe 8 of adjacent floor plates 1 can be coupled.

After said floor plates 1 have been coupled, the recess 17 can be filled by applying a concrete mix, such that a nicely finished stable floor is obtained.

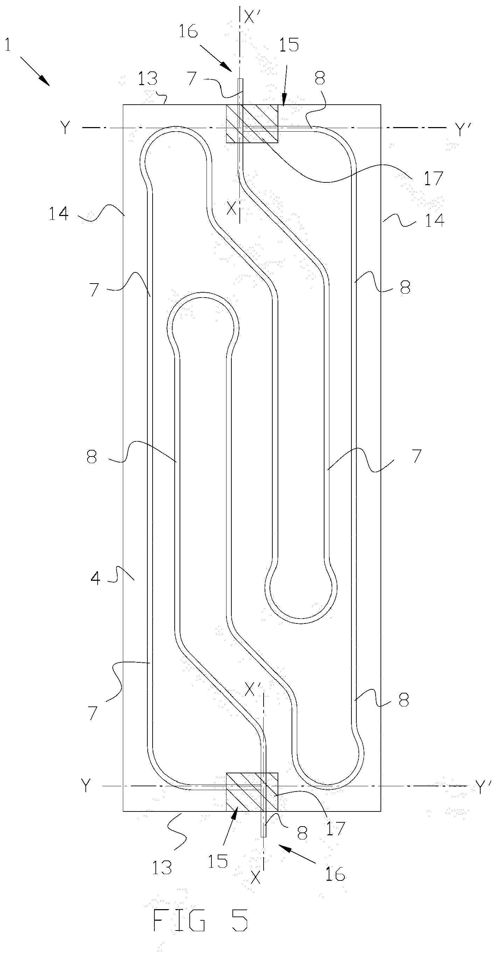

The supply pipe 7 and the return pipe 8 do not cross each other in the concrete portion 4 and they follow a meandering pattern so as to cover the entire surface of the floor plate 1, as is shown in greater detail in the sectional view of figure 5.

The invention is by no means restricted to the embodiments of a floor plate 1 for a stable according to the invention described by way of example and illustrated in the accompanying figures; on the contrary, such a floor plate 1 can be achieved in other ways while still remaining within the scope of the invention.

## Claims

1. Floor plate (1) for a stable wherein the floor plate (1) has a top surface (2) and a bottom surface (3) as well as a certain thickness (D), wherein the floor plate (1) is composed of a concrete portion (4) and an insulating portion (5) formed of a plate of insulating material (6) and wherein a supply pipe (7) and a return pipe (8) are embedded in the concrete portion (4) designed for use in a floor heating system, **characterised in that** the top surface (2) and the bottom surface (3) of the floor plate (1) are made substantially flat to the exception of any possible grooves (9) provided in the top surface (2), and **in that** the central portion (10) of the bottom surface (3) is formed of the insulating portion (5) made of insulating material (6), wherein this insulating portion (5) is further surrounded by the concrete portion (4) at its edges (11) which thus also forms the perimeter (12) of the bottom surface (3).

2. Floor plate (1) according to claim 1, **characterised in that** the floor plate (1) has a rectangular perimeter.

3. Floor plate (1) according to claim 1 or 2, **characterised in that** the floor plate (1) can be connected to other similar floor plates (1), i.e. **in that** the supply pipe (7) and the return pipe (8) can work in conjunction with corresponding piping of another floor plate.

4. Floor plate (1) according to claims 2 and 3, **characterised in that** the supply pipe (7) and the return pipe (8) extend between the short sides (13) of the floor plate (1).

5. Floor plate (1) according to claim 4, **characterised in that** the supply pipe (7) and the return pipe (8) extend at a short side (13) of the floor plate (1) according to directions (XX',YY') which are perpendicular to one another.

6. Floor plate (1) according to claim 5, **characterised in that** the far end (15) of a supply pipe (7) or a return pipe (8) is directed parallel to a short side (13) of the floor plate (1) and the other far end (16) of a supply pipe (7) or a return pipe (8) is directed parallel to a long side (14) of the floor plate (1).

7. Floor plate (1) according to one or several of claims 3 to 6, **characterised in that** at the far ends (15,16) of the supply pipe (7) and the return pipe (8), a recess (17) is provided in the concrete portion (4) designed for fitting connecting pieces with which the supply pipe (7) and the return pipe (8) of adjacent floor plates (1) can be coupled.

8. Floor plate (1) according to one or several of the preceding claims, **characterised in that** the supply pipe (7) and the return pipe (8) do not cross each other in the concrete portion (4) and follow a meandering pattern so as to cover the entire surface of the floor plate (1).

9. Floor plate (1) according to one or several of the preceding claims, **characterised in that** the insulating portion (5) consists of a plate of insulating material (6) having a thickness (D') between 1.5 and 3 cm.
